# EUROPÄISCHE PATENTSCHRIFT

(11) **EP 3 668 668 B1**
(45) Veröffentlichungstag und Bekanntmachung des Hinweises auf die Patenterteilung: **13.12.2023**
(21) Anmeldenummer: 18755789.7
(22) Anmeldetag: 13.08.2018
(51) Int. Cl.: B23B 29/04, B23B 31/107, B23P 15/28

(54) **WERKZEUGHALTERANORDNUNG UND VERFAHREN ZUM HERSTELLEN EINES WERKZEUGHALTERS**
TOOL HOLDER ARRANGEMENT AND METHOD FOR PRODUCING A TOOL HOLDER
DISPOSITIF DE PORTE-OUTIL ET PROCÉDÉ POUR LA FABRICATION D'UN PORTE-OUTIL

(30) Priorität: 14.08.2017 DE 102017118501
(43) Veröffentlichungstag der Anmeldung: 24.06.2020
(73) Patentinhaber: MAS GmbH, 71229 Leonberg (DE)
(72) Erfinder: MOERK, Thomas, 71272 Renningen (DE); BOELKE, Uwe, 71737 Kirchberg/Murr (DE)
(74) Vertreter: Ostertag & Partner Patentanwälte mbB
(86) Internationale Anmeldenummer: PCT/EP2018/071945
(87) Internationale Veröffentlichungsnummer: WO 2019/034620

(56) Entgegenhaltungen:
- EP-A1- 0 175 902
- WO-A1-2014/157943
- JP-A- S6 215 055
- US-A- 4 725 173
- US-A- 4 834 597
- US-A- 5 873 682
- US-A1- 2006 056 933
- Sandvik Coromant: "Rotating Tools 2011", 31. Dezember 2010 (2010-12-31), Sandvik Coromant, Sandviken, Sweden, XP002786679, Seite G4 - Seite G7 Seite D60 - Seite D61; Beispiele R790-050C5S1-16H Seite E84; Beispiele 881-D1400C5-04 Seite G9; Beispiele C5-390.14004-40 080 Seite G108; Beispiele C5-390.00-M16-01
- Sandvik Coromant: "Turning Tools 2011", 31. Dezember 2010 (2010-12-31), Sandvik Coromant, Sandviken, Sweden, XP002786680, Seite A115; Beispiele C5-PCLNR-35060-19 Seite A248; Beispiele C5-PDUNR-17090-11
- Sandvik Coromant: "Rotating Tools 2001", 28. Februar 2001 (2001-02-28), Sandvik Coromant, Sandviken, Sweden, XP002786681, Seite E131, Seite E131
- "ADVERTISEMENT", WERKSTATT + BETRIEB, CARL HANSER VERLAG, MÜNCHEN DE, Bd. 124, Nr. 1, 1. Januar 1991 (1991-01-01), Seite 36, XP000175452, ISSN: 0043-2792

## Beschreibung

Die vorliegende Erfindung betrifft einen Werkzeughalter für ein Werkzeug zur spanenden Bearbeitung von Werkstücken, mit einem Werkzeughalter-Körper, der eine Werkzeughalter-Längsachse definiert, an dem einer Werkzeugaufnahme zur Festlegung eines Werkzeuges ausgebildet ist und an dem eine Werkzeughalter-Schnittstelle zur Befestigung des Werkzeughalters an einem Halterschaft ausgebildet ist.

Ferner betrifft die vorliegende Erfindung einen zugehörigen Halterschaft sowie eine Werkzeuganordnung mit einer Werkzeughalter-Anordnung, die einen Werkzeughalter mit einem daran festgelegten Werkzeug und einen Halterschaft aufweist.

Schließlich betrifft die vorliegende Erfindung ein Verfahren zum Herstellen eines Werkzeughalters.

Auf dem Gebiet der spanenden Bearbeitung von Werkstücken, insbesondere von metallischen Werkstücken, ist es bekannt, Werkzeuge wie Wendeplatten an einer Werkzeughalter-Anordnung festzulegen, insbesondere lösbar festzulegen, um ein verschlissenes Werkzeug auf einfache Weise austauschen zu können.

Derartige Werkzeughalter-Anordnungen beinhalten in der Regel einen Halterschaft, der in einer Spanneinrichtung einer Werkzeugmaschine einspannbar ist, derart, dass von der Werkzeugmaschine auf das Werkzeug Kräfte und Drehmomente übertragbar sind.

Hierbei sind sogenannte "Monoblock"-Bauweisen bekannt, bei denen ein Halterschaft an einem Ende einen einstückig angeformten Werkzeughalterkopf aufweist, an dem eine Werkzeugaufnahme zur Festigung eines Werkzeuges ausgebildet ist.

Sofern bei dieser Art von Werkzeughalter-Anordnung ein unterschiedliches Werkzeug in der Werkzeugmaschine zu verwenden ist, ist die Werkzeughalter-Anordnung aus der Spanneinrichtung der Werkzeugmaschine insgesamt zu entnehmen, um anschließend eine andere Werkzeughalter-Anordnung in die Werkzeugmaschine einzuspannen.

Auf dem Gebiet der Werkzeughalter-Anordnungen sind auch Schnellwechsel-Werkzeughalter bekannt geworden. Der Grundgedanke besteht hier darin, eine Komponente eines solchen Schnellwechsel-Werkzeugkonzeptes dauerhaft in einer Werkzeugmaschine einzuspannen und an einem solchen Halterschaft eine Schnittstelle zur Verbindung mit Werkzeughaltern vorzusehen, an denen unterschiedliche Werkzeuge ausgebildet oder festgelegt sein können.

Ein seit langem in der Werkzeugmaschinenindustrie bekanntes System ist unter der Bezeichnung " coromant capto^{®}" bekannt geworden, siehe auch der Prospekt "Rotating Tools 2011" von Sandvik Coromant, Schwede.

Da ein Halterschaft in Form einer Kupplung fest in die Werkzeugmaschine eingespannt ist, können Werkzeugwechsel sehr schnell durchgeführt werden. Zudem ist es in vielen Fällen nicht notwendig, ein neu eingesetztes Werkzeug hinsichtlich seiner Lage relativ zu der Werkzeugmaschine neu zu kalibrieren. Die Werkzeugwechsel können daher sehr schnell erfolgen.

Aus dem Dokument EP 1 154 872 B1 ist zudem eine Werkzeugkupplung bekannt, mit einem Halter, einem Adapter für wenigstens einen Schneideinsatz für die spanentfernende Bearbeitung und einer Schraube, um den Halter und den Adapter lösbar miteinander zu verbinden. Die Längsmittelachse der Schraube stimmt mit der Längsmittelachse der Werkzeugkupplung überein. Der Halter ist mit einer ersten Verzahnung mit gegenseitig parallelen Nuten versehen. Der Adapter ist mit einer zweiten Verzahnung mit gegenseitig parallelen Nuten versehen. Sowohl die erste Verzahnung als auch die zweite Verzahnung befinden sich in einer Ebene, die eine Ausdehnung hat, die im Wesentlichen senkrecht zu der Längsmittelachse der Werkzeugkupplung ist. Dabei hat die Schraube ein erstes äußeres Gewinde, das in aktiver Position in Eingriff mit einem inneren Gewinde des Halters steht. Ferner hat die Schraube einen sich nach außen erstreckenden, inneren mittig angeordneten Kühldurchlass.

Ferner offenbart das Dokument EP 1 547 710 B1 ein Schneidwerkzeug mit zwei Teilen, die über Verzahnungsverbindungsflächen miteinander verbindbar sind, die getrennt eine Gruppe von querschnittsmäßig im Allgemeinen V-förmige Rippen aufweisen, welche durch Nuten im Abstand angeordnet sind, welche durch schräge Flanken auf den Rippen gebildet sind, wobei die Rippen gestreckt sind und parallel zueinander verlaufen. Mindestens eine der zwei Flanken, die gemeinsam eine Nut bestimmen, ist mit zwei oder mehr im Abstand angeordneten Kontaktstützflächen gebildet, die in einer gemeinsamen Ebene angeordnet sind, welche geometrisch die Flanke bestimmt, sowie eine oder mehrere eingesenkte Freiflächen zwischen diesen.

Das oben erwähnte Schnellwechselsystem basiert auf einer axialen Einspannung mittels einer Schraube, die koaxial zu einer Längsachse des Werkzeughalters ausgerichtet ist. Um eine Betätigung der Schraube von einer Seite zu ermöglichen, ist eine aufwendige Konstruktion im Innern der Halterschaftes notwendig, so dass der Halterschaft insgesamt sehr groß baut. Der Schnellwechsel-Werkzeughalter, der oben beschrieben worden ist, eignet sich daher insbesondere für große Werkstücke.

Generell sind auch Wechselsysteme bekannt, bei denen Werkzeugträger mittels Schrauben an einem Halter befestigt werden, die schräg in den Halter hineingehen. Auch hierbei ist die Zugängigkeit jedoch relativ schlecht, insbesondere dann, wenn mehrere derartige Halterschäfte parallel zueinander versetzt montiert werden, beispielsweise in y-Richtung. Sofern bei derartigen Wechselsystemen Planflächen verwendet werden, ist es zudem üblich, diese zu schleifen, insbesondere, um für eine hinreichende Dichtheit zu sorgen, wenn Kühlmittel von dem Halterschaft zu dem Werkzeughalter transportiert werden soll.

Aus der US 4 834 597 A ist eine Anordnung aus einem Werkzeug oder einem Werkzeughalter für ein Werkzeug und aus einer Spindel oder einem Halter bekannt. Bei einem Ausführungsbeispiel hat die Spindel eine konische Ausnehmung mit nicht kreisförmigen Querschnitt zur Aufnahme eines komplementären Vorsprungs, der am Werkzeughalter ausgebildet ist. Zur axialen Fixierung des Werkzeughalters an der Spindel wird ein Mechanismus verwendet, wie er in der US 4 725 173 beschrieben ist.

US 4 834 597 A offenbart einen Werkzeughalter und einen Halterschaft gemäß dem Oberbegriff der Ansprüche 1 und 5.

Aus der US 2006/0056933 A1 ist eine Anordnung eines Werkzeugs und eines Werkzeughalters bekannt, bei der das Werkzeug einen kegelstumpfförmigen Schaftabschnitt mit oktogonalem Querschnitt hat, an den sich ein Zugbolzen anschließt. Dieser dient der axialen Fixierung des Werkzeugs am Werkzeughalter.

Die EP 0 175 902 A1 offenbart eine Werkzeughalteranordnung, bei der ein Grundhalter und ein Wechselhalter nicht über Planflächen, sondern über profilierte Flächen aneinander anliegen. Zur Erzeugung einer axialen Verspannung sind zwei diametral gegenüberliegende Gewindestifte mit Schrägflächen vorgesehen

Es ist vor diesem Hintergrund eine Aufgabe der Erfindung, ein verbessertes Werkzeughaltersystem sowie ein verbessertes Verfahren zum Herstellen eines Werkzeughalters anzugeben.

Die obige Aufgabe wird zum einen gelöst durch einen Werkzeughalter für ein Werkzeug zur spanenden Bearbeitung von Werkstücken, mit einem Werkzeughalter-Körper, der eine Werkzeughalter-Längsachse definiert, an dem eine Werkzeugaufnahme zur Festlegung eines Werkzeuges ausgebildet ist und an dem eine Werkzeughalter-Schnittstelle zur Befestigung des Werkzeughalters an einem Halterschaft ausgebildet ist, der in einer Werkzeugmaschine einspannbar ist, wobei die Werkzeughalter-Schnittstelle aufweist: eine quer zur Längsachse ausgerichtete Werkzeughalter-Planfläche, an der eine Halterschaft-Planfläche zur Anlage kommen kann, um zwischen der Werkzeugaufnahme und dem Halterschaft eine definierte Relativlage (L_{WR}) in Längsrichtung einrichten zu können, einen Werkzeughalter-Konusabschnitt, der in einem Querschnitt polygonförmig ist und der mit einem entsprechend polygonförmigen Halterschaft-Konusabschnitt in Eingriff gelangen kann, um zwischen der Werkzeugaufnahme und dem Halterschaft eine definierte Relativlage in Tangentialrichtung einrichten zu können, und einen Werkzeughalter-Zylinderabschnitt, der mit einem entsprechenden Halterschaft-Zylinderabschnitt zusammenwirken kann. An dem Werkzeughalter-Zylinderabschnitt ist ein Axialanzugsmerkmal einer Axialanzugseinrichtung ausgebildet ist, die eine radiale Ausnehmung in dem Werkzeughalter-Zylinderabschnitt aufweist, die eine unter einem Winkel ausgerichtete Schrägfläche aufweist, an der eine Längsspannschraube des Halterschaftes angreifen kann

Ferner wird die obige Aufgabe gelöst durch einen Halterschaft für einen Werkzeughalter, insbesondere einen erfindungsgemäßen Werkzeughalter, mit einem Halterschaft-Körper, der einen Schaftabschnitt zum Einspannen in einer Spanneinrichtung einer spanenden Werkzeugmaschine und eine Halterschaft-Schnittstelle zum Befestigen eines Werkzeughalters an dem Halterschaft-Körper aufweist, wobei die Halterschaft-Schnittstelle aufweist: eine quer zu einer Längsachse ausgerichtete Halterschaft-Planfläche, an der eine Werkzeughalter-Planfläche in Anlage kommen kann, um zwischen dem Werkzeughalter und dem Halterschaft eine definierte Relativlage in Längsrichtung einrichten zu können, einen Halterschaft-Konusabschnitt, der in einem Querschnitt polygonförmig ist und der mit einem entsprechend polygonförmigen Werkzeughalter-Konusabschnitt in Eingriff gelangen kann, um zwischen dem Werkzeughalter und dem Halterschaft eine definierte Relativlage in Tangentialrichtung einrichten zu können, und einen Halterschaft-Zylinderabschnitt, der mit einem entsprechenden Werkzeughalter-Zylinderabschnitt zusammenwirken kann. Der Halterschaft-Zylinderabschnitt weist eine radiale Gewindebohrung auf, in die eine Längsspannschraube einschraubbar ist, die in eine radiale Ausnehmung des Werkzeughalters greifen kann

Ferner wird die obige gelöst durch eine Werkzeuganordnung mit einer Werkzeughalteranordnung, die einen Werkzeughalter nach einem der Ansprüche 1-4 mit einem daran festgelegten Werkzeug sowie einen Halterschaft nach einem der Ansprüche 5-9 aufweist.

Schließlich wird die obige Aufgabe gelöst durch ein Verfahren zum Herstellen eines Werkzeughalters nach einem der Ansprüche 1-4, mit den Schritten:
- Bereitstellen eines Werkzeughalters-Rohlings;
- Ausbilden der Werkzeughalter-Schnittstelle an dem Werkzeughalter-Rohling;
- Einsetzen des Werkzeughalter-Rohlings in einen Referenz-Halterschaft, derart, dass die Werkzeughalter-Planfläche an einer Halterschaft-Planfläche des Referenz-Halterschaftes anliegt; und
- Bearbeiten einer Werkzeugaufnahme des Werkzeughalter-Rohlings, um den Werkzeughalter fertigzustellen.

Mit dem erfindungsgemäßen Werkzeughalter und dem erfindungsgemäßen Halterschaft kann eine Schnellwechselfunktion realisiert werden. Der Halterschaft kann in einer Spanneinrichtung einer Werkzeugmaschine eingespannt bleiben. Unterschiedlichste Werkzeuge an Werkzeughaltern, die jeweils eine identische Werkzeughalter-Schnittstelle, jedoch unterschiedliche Werkzeugaufnahmen besitzen, können auf diese Art und Weise an einen derart eingespannt Halterschaft angesetzt werden.

Die Schnittstellen von Werkzeughalter und Halterschaft sind dabei vorzugsweise so aufeinander abgestimmt, dass in der montierten Position immer eine Anlage der Planflächen realisiert wird. Dies kann trotz der Tatsache, dass die Halter-Bauelemente auch über ihre Konusabschnitte miteinander in Kontakt treten, zu dem Ergebnis führen, dass eine Werkzeugaufnahme und ein darin eingesetztes Werkzeug in Bezug auf die Einspannung des Halterschafts in der Werkzeugmaschine eine definierte Relativlage einnehmen, die zumindest bereits vorkalibriert ist.

Dabei ist die auf diese Art und Weise eingerichtete Relativposition zwischen Werkzeughalter und Halterschaft vorzugsweise geometrisch überbestimmt. Denn die Konusabschnitte von Werkzeughalter und Halterschaft sind so präzise in Bezug auf die jeweiligen Planflächen gearbeitet, dass die Konusabschnitte insbesondere in einem Querschnittsbereich, bei denen die Konusabschnitte polygonal geformt sind, in Anlage aneinander gelangen, und gleichzeitig die Planflächen in Anlage aneinander gelangen. Hierdurch kann erreicht werden, dass in der Befestigungsposition des Werkzeughalters an dem Halterschaft zum einen eine definierte Lage dieser Bauteile in Längsrichtung (quer zu den Planflächen) eingerichtet werden kann, als auch in Tangential- bzw. Umfangsrichtung. Mit der definierten Position in Tangentialrichtung wird letztlich auch eine definierte Position in Richtungen quer zu der Längsrichtung realisiert. Mit anderen Worten kann eine Referenzposition der Werkzeugaufnahme des Werkzeughalters eine bestimmte Relativlage zu dem Halterschaft und folglich zu der Spanneinrichtung der Werkzeugmaschine einnehmen, wobei diese Relativlage in einer Genauigkeit von vorzugsweise kleiner 0,01 mm realisiert werden kann.

Dabei ist es von besonderem Vorzug, wenn wenigstens eine der Planflächen von Werkzeughalter und Halterschaft lediglich fräsend bearbeitet wird, und nicht geschliffen wird.

Ferner kann die Werkzeughalteranordnung für relativ kleine Werkzeugmaschinensysteme ausgelegt sein, beispielsweise mit Durchmessern des Halterschaftes im Bereich von 8 mm bis 30 mm, insbesondere in einem Bereich von 10 mm bis 25 mm.

Gerade bei derartigen Systemen, bei denen relativ wenig Material für eine sichere Befestigung in Längsrichtung und in tangentialer Richtung vorhanden ist, kann die erfindungsgemäße Schnittstelle von Werkzeughalter und Halterschaft hervorragende Ergebnisse liefern.

Bei dem erfindungsgemäßen Werkzeughalter kann das Werkzeug beispielsweise eine Schneidplatte sein, insbesondere eine Wendeplatte. Das Werkzeug kann insbesondere lösbar an der Werkzeugaufnahme festgelegt werden.

Der Konusabschnitt und der Zylinderabschnitt von Werkzeughalter bzw. Halterschaft sind jeweils parallel zu der Längsachse ausgerichtet, insbesondere konzentrisch hierzu.

Der Konusabschnitt von Werkzeughalter und Halterschaft befindet sich vorzugsweise jeweils in Längsrichtung zwischen dem jeweiligen Zylinderabschnitt und der jeweiligen Planfläche.

Die Zylinderabschnitte von Werkzeughalter und Halterschaft sind als Passung gearbeitet. Die Passung ist vorzugsweise eine Spielpassung, wobei die Spielpassung insbesondere so ausgebildet ist, dass die Teile von Hand gerade noch verschiebbar sind.

Durch die Passung kann folglich erreicht werden, dass der Werkzeughalter auch verkippsicher in Bezug auf die Längsachse an dem Halterschaft befestigt werden kann.

Die Passung zwischen den Zylinderabschnitten von Werkzeughalter und Halterschaft ermöglicht auch, dass die Axialanzugseinrichtung über eine Kegelschraube nach der Art einer Madenschraube bzw. Längsspannschraube erfolgen kann, ohne dass hierbei ein Verkanten auftritt.

Durch die Kombination von Planfläche und Konusabschnitt kann in der Befestigungsposition zwischen Werkzeughalter und Halterschaft ferner eine hohe Fluid-Dichtheit erzielt werden, so dass Fluid von dem Halterschaft zu dem Werkzeughalter geführt werden kann, ohne dass eine Dichtung im Bereich der Zylinderabschnitte oder an anderer Stelle ausgebildet sein müsste.

Die Schnittstellen von Werkzeughalter und Halterschaft werden vorzugsweise jeweils durch einen Fräsprozess hergestellt. Bevorzugt ist es ferner, wenn der Fräsprozess mit Genauigkeiten im Bereich von 0-0,002 mm durchgeführt wird. Bevorzugt ist es ferner, wenn die Flächen der Schnittstellen nach dem Fräsen nicht weiter spanend bearbeitet werden, also insbesondere nicht geschliffen, gehont oder dergleichen werden.

Bei dem erfindungsgemäßen Verfahren wird an einem Werkzeughalterrohling zunächst die Werkzeughalter-Schnittstelle hergestellt. Anschließend wird der Werkzeughalter in einen Referenz-Halterschaft eingesetzt, der hinsichtlich seiner Halterschaft-Schnittstelle kalibriert ist. Nach dem Einsetzen wird die Werkzeugaufnahme gefertigt, beispielsweise ebenfalls durch einen Fräsprozess. Durch diese Maßnahme kann die Werkzeugaufnahme so gefertigt werden, dass sie zumindest einen Referenzpunkt aufweist, der in Bezug auf die Werkzeughalter-Schnittstelle kalibriert ist.

Hierdurch ist es möglich, Werkzeughalter mit Werkzeugaufnahmen bereitzustellen, die in Bezug auf einen in eine Werkzeugmaschine eingesetzten Halterschaft kalibriert oder vorkalibriert sind, so dass sich aufwändige Einmessarbeiten oder Kalibrierungstätigkeiten bei einem Werkzeugwechsel vorzugsweise erübrigen.

Dabei ist es möglich, eine derartige Referenzposition in Form einer Referenzlänge oder auch in Form eines Referenzwinkels oder dergleichen für den so hergestellten Werkzeughalter zu dokumentieren und zuzuordnen, so dass beim Einsetzen des Werkzeughalters in einen Halterschaft, der in einer Werkzeugmaschine eingespannt ist, eine Kalibrierung durch Eingabe dieser Referenzgröße bzw. dieses Referenzpunktes erfolgen kann, zumindest eine Art Vorkalibrierung. Da vorzugsweise nach einem Werkzeugwechsel eine Wiederholungsgenauigkeit kleiner 0,01 mm realisiert ist, ist ein Werkstück, das eine größere Toleranz aufweist, ohne Korrektur (Endkalibrierung) herstellbar.

Die Aufgabe wird somit vollkommen gelöst.

Bei dem erfindungsgemäßen Werkzeughalter ist es von besonderem Vorteil, dass an dem Werkzeughalter-Zylinderabschnitt ein Axialanzugsmerkmal einer Axialanzugseinrichtung ausgebildet ist.

Auf diese Art und Weise ist es möglich, den Werkzeughalter und den Halterschaft mittels eines geeigneten Anzugswerkzeuges axial aneinander anzuziehen, bis die Planflächen in Anlage gelangen.

Erfindungsgemäß weist die Axialanzugseinrichtung eine radiale Ausnehmung in dem Werkzeughalter-Zylinderabschnitt auf, die eine unter einem Winkel ausgerichtete Schrägfläche aufweist, an der eine Längsspannschraube des Halterschaftes angreifen kann.

Der Schrägwinkel der Schrägfläche liegt vorzugsweise in einem Bereich von 20° bis 70° gegenüber einer Ebene, die senkrecht zu der Längsachse ausgerichtet ist.

Die Schrägfläche kann eine Planfläche sein, ist jedoch vorzugsweise eine Konusfläche, die eine Längsspannschraube mit einem entsprechenden Konusabschnitt eingreifen kann.

Gemäß einer weiteren bevorzugten Ausführungsform ist die Werkzeugaufnahme gegenüber der Werkzeughalter-Längsachse in einer Querrichtung versetzt angeordnet, wobei das Axialanzugsmerkmal in Querrichtung gesehen auf einer der Werkzeugaufnahme gegenüberliegenden Seite der Werkzeughalter-Längsachse angeordnet ist.

Insbesondere bei Werkzeugmaschinen mit mehreren parallel angeordneten Werkzeughalteranordnungen, insbesondere mit einer Reihe von quer zu einer Werkstücklängsachse angeordneten Werkzeughalteranordnungen, kann hierdurch erreicht werden, dass die Befestigung zwischen Werkzeughalter und Halterschaft auf einfache Art und Weise lösbar ist. Denn durch diese Ausgestaltung kann eine vereinfachte Zugänglichkeit erreicht werden.

Ferner ist es insgesamt vorteilhaft, wenn der Werkzeughalter-Konusabschnitt eine Form aufweist, die zumindest in einem Querschnitt benachbart zu der Werkzeughalter-Planfläche im Wesentlichen polygonal ist, vorzugsweise über ihre gesamte axiale Länge polygonal ist. Am Übergang zu dem Werkzeughalter-Zylinderabschnitt kann dabei eine Hinterschneidung vorgesehen sein.

Hierdurch kann erreicht werden, dass der Eingriff der Konusabschnitte insbesondere dann für eine tangentiale Sicherung sorgen kann, wenn die Schnittstellen mit ihren Planflächen aneinander anliegen.

Ferner ist es insgesamt vorteilhaft, wenn in dem Werkzeughalter-Körper eine Werkzeughalter-Bohrung zur Zuführung eines Kühl- oder Schmiermittels (KSS) ausgebildet ist.

Auf diese Art und Weise kann Kühl- oder Schmiermittel von dem Halterschaft zu dem Werkzeughalter übertragen werden. Vorzugsweise mündet ein Kanal des Werkzeughalters, der mit dieser Werkzeughalter-Bohrung verbunden ist, so, dass das Kühl- oder Schmiermittel unmittelbar auf einen Zerspanungsabschnitt des Werkzeuges gespritzt werden kann.

Bei dem erfindungsgemäßen Halterschaft weist der Halterschaft-Zylinderabschnitt eine radiale Gewindebohrung aufweist, in die eine Längsspannschraube einschraubbar ist, die in eine radiale Ausnehmung des Werkzeughalters greifen kann.

Die Gewindebohrung und die Längsspannschraube sind dabei gemeinsam mit der radialen Ausnehmung Teil der Axialanzugseinrichtung. Der Zugang zu der Längsspannschraube erfolgt dabei vorzugsweise von einer Seite der Längsachse, die einer Werkzeugaufnahme des Werkzeughalters gegenüberliegt.

Ferner ist es vorteilhaft, wenn der Halterschaft-Zylinderabschnitt eine radiale Freistellungsvertiefung aufweist, die sich über eine axiale Länge erstreckt, die kleiner ist als eine axiale Länge des Halterschaft-Zylinderabschnittes.

Eine derartige radiale Freistellungsvertiefung kann beispielsweise im Querschnitt sichelförmig sein.

Die radiale Freistellungsvertiefung weist dabei vorzugsweise eine axiale Länge auf, die in einem Bereich von 30 % bis 90 % der axialen Länge des Halterschaft-Zylinderabschnittes liegt, insbesondere in einem Bereich von 50 % bis 90 %.

Die radiale Freistellungsvertiefung gestattet zum einen, dass eine Passung zwischen den Zylinderabschnitten so ausgebildet sein kann, dass die Teile von Hand gerade noch verschiebbar sind. Diese Passung wirkt nun insbesondere in jenem Teil des Halterschaft-Zylinderabschnittes, innerhalb dessen die Freistellungsvertiefung nicht vorgesehen ist.

Die radiale Freistellungsvertiefung ist dabei vorzugsweise von einem axialen Ende des Halterschaft-Zylinderabschnittes beabstandet angeordnet.

Auf diese Weise kommt die Passung zwischen den Zylinderabschnitten erst dann vollumfänglich zum Eingriff, wenn nur noch ein kurzes axiales Stück einzuführen ist.

Die radiale Freistellungsvertiefung erstreckt sich in Umfangsrichtung vorzugsweise über einen Winkelbereich von kleiner 180°, insbesondere kleiner 150°.

Von besonderem Vorzug ist es, wenn die radiale Freistellungsvertiefung sich in Umfangsrichtung mit der radialen Gewindebohrung überschneidet.

Durch diese Maßnahme kann erreicht werden, dass sich Werkzeughalter und Halterschaft axial aneinander anziehen lassen, und zwar auch in dem Bereich des polygonalen Konusabschnittes, ohne dass ein Verkanten stattfindet.

Gemäß einer weiteren vorteilhaften Ausführungsform weist der Halterschaft-Körper eine Halterschaft-Bohrung zur Zuführung eines Kühl- oder Schmiermittels auf, die mit der Werkzeughalter-Bohrung eines Werkzeughalters verbindbar ist.

Eine Zuführung von Kühl- oder Schmiermittel in die Halterschaft-Bohrung kann dabei vorzugsweise über ein axiales Ende des Halterschaft-Körpers erfolgen, oder über eine radiale Zuführung.

Von besonderem Vorteil ist es, wenn die Halterschaft-Bohrung in einer der Halterschaft-Schnittstelle gegenüberliegenden Stirnseite des Halterschaft-Körpers mündet und eine Dichteinrichtung aufweist, über die ein in die Halterschaft-Bohrung eingeführtes Zuführrohr abdichtbar ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Werkzeugmaschine mit einer erfindungsgemäßen Werkzeuganordnung, die eine Werkzeughalteranordnung mit einem Werkzeughalter und einem Halterschaft beinhaltet;
- Fig. 2: eine Schnittansicht entlang der Linie II-II der Fig. 1;
- Fig. 3: eine schematische Längsschnittdarstellung durch eine weitere Ausführungsform einer Werkzeughalteranordnung;
- Fig. 4: eine schematische Schnittansicht entlang der Linie IV-IV der Fig. 3;
- Fig. 5: eine schematische Darstellung eines Halterschaftes mit unterschiedlichen Werkzeughaltern;
- Fig. 6: eine Darstellung einer Werkzeugmaschine mit einer Spanneinrichtung für ein Werkstück und einer Mehrzahl von Werkzeughalteranordnungen, die in einer yRichtung ausgerichtet sind;
- Fig. 7: eine schematische Darstellung einer weiteren Werkzeughalteranordnung mit Bohrungen für Kühl- oder Schmiermittel;
- Fig. 8: eine Darstellung eines Endes eines Halterschaftes mit einem in eine Halterschaft-Bohrung eingeführten Zuführrohr; und
- Fig. 9: eine Darstellung einer Schmiermittelverteilereinrichtung mit Zuführrohren für eine Mehrzahl von Werkzeughalteranordnungen.

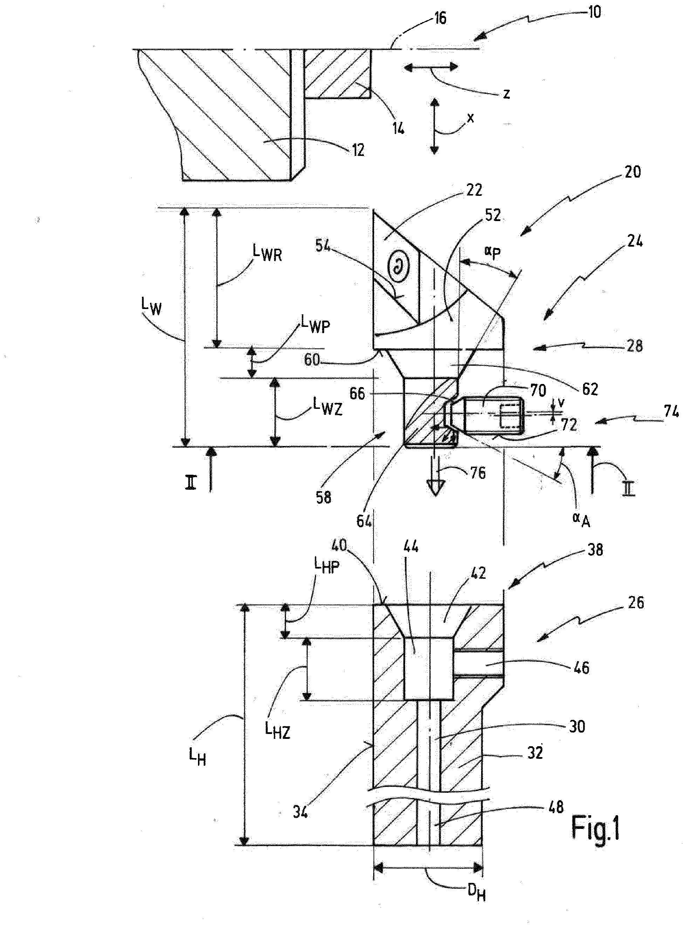

In Fig. 1 ist in schematischer Form eine Werkzeugmaschine in Form einer Drehmaschine 10 dargestellt, und zwar in Zuordnung zu einer Werkzeuganordnung, die in Fig. 1 generell mit 20 bezeichnet ist.

Die Drehmaschine 10 weist eine in schematischer Form angedeutete Spanneinrichtung 12 für ein drehend zu bearbeitendes Werkstück 14 auf, wobei die Spanneinrichtung 12 Teil einer nicht näher bezeichneten Spindel sein kann, die um eine Drehachse 12 drehbar gelagert ist.

Die Werkzeuganordnung 20 weist ein Werkzeug 22 sowie eine Schneidplatte, insbesondere eine Wendeplatte auf, wobei das Werkzeug 22 lösbar an einer Werkzeughalteranordnung 24 festlegbar ist.

Die Werkzeughalteranordnung 24 weist einen Halterschaft 26 auf, der als ein Bauteil ausgeführt ist, sowie einen Werkzeughalter 28, der als ein eigenes Bauteil ausgeführt ist und der mit dem Halterschaft 26 verbindbar und daran befestigbar ist, wie nachstehend ausgeführt werden wird. Die Werkzeughalteranordnung 24 weist eine Längsachse 30 auf. Die Längsachse 30 ist während eines Drehprozesses vorzugsweise parallel zu einer Koordinatenachse x ausgerichtet. Die Drehachse 16 der Drehmaschine 10 ist vorzugsweise parallel zu einer z-Achse dieses Koordinatensystems ausgerichtet. Die Relativbewegung zwischen Werkstück 14 und Werkzeug 22 kann in z-Richtung durch Bewegung der Werkzeughalteranordnung 24 in z-Richtung erfolgen, und/oder durch Bewegung der Spindel bzw. Spanneinrichtung 12 in z-Richtung. Die Zustellbewegung in x-Richtung wird hingegen vorzugsweise von der Werkzeughalteranordnung 24 vollzogen, wie es bei Drehmaschinen generell üblich ist.

Die in Fig. 1 nicht näher dargestellte y-Koordinate ist vorzugsweise ebenfalls mittels der Werkzeughalteranordnung 24 einstellbar, kann jedoch auch durch eine in y-Richtung bewegbare Spindel eingerichtet werden.

Der Halterschaft 26 weist einen Halterschaft-Körper 32 auf, der einen Schaftabschnitt 34 beinhaltet. Der Schaftabschnitt 34 kann in einer Werkzeughalteraufnahme der Werkzeugmaschine eingespannt werden. Der Schaftabschnitt 34 kann im Querschnitt rund sein, ist jedoch vorzugsweise im Querschnitt polygonal, insbesondere viereckig.

Der Schaftabschnitt 34 im Querschnitt weist einen Durchmesser D_{H} auf, der beispielsweise in einem Bereich von 5 mm bis 30 mm liegen kann, insbesondere in einem Bereich von 10 mm bis 25 mm.

Ferner weist der Halterschaft-Körper 32 eine axiale Länge L_{H} auf, die größer ist als der genannte Durchmesser D_{H}.

An einem axialen Ende weist der Halterschaft-Körper 32 eine Halterschaft-Schnittstelle 38 auf. Die Halterschaft-Schnittstelle 38 beinhaltet eine Planfläche 40 an einer Stirnseite des Halterschaft-Körpers 32.

Die Halterschaft-Schnittstelle 38 weist ferner einen Halterschaft-Konusabschnitt 42 auf, der Teil einer Axialausnehmung in dem Halterschaft-Körper 32 ist, wobei der Halterschaft-Konusabschnitt 42 von der Halterschaft-Planfläche 40 ausgeht und sich um eine axiale Länge L_{HP} in den Halterschaft-Körper 32 hinein erstreckt. Der Halterschaft-Konusabschnitt 42 weist benachbart zu der Halterschaft-Planfläche 40 im Querschnitt eine Form auf, die polygonal bzw. polygonförmig ist.

Die Axialvertiefung in dem Halterschaft-Körper 32 beinhaltet ferner einen Halterschaft-Zylinderabschnitt 44, der sich von dem Halterschaft-Konusabschnitt 42 axial in den Halterschaft-Körper 32 hinein erstreckt, und zwar um eine Länge L_{HZ}. Die Länge L_{HZ} ist vorzugsweise größer als L_{HP}.

Der Halterschaft -Konusabschnitt 42 ist benachbart zu dem Halterschaft-Zylinderabschnitt 44 im Querschnitt im Wesentlichen kreisförmig ausgebildet. Der Halterschaft-Konusabschnitt 42 ist so geformt, dass er von der Kreisform benachbart zu dem Halterschaft-Zylinderabschnitt 44 kontinuierlich in die Polygonform übergeht, die der Halterschaft-Konusabschnitt 42 benachbart zu der Planfläche 40 hat.

Im Bereich des Halterschaft-Zylinderabschnittes 44 weist der Halterschaft-Körper 32 eine radial ausgerichtete Gewindebohrung 46 zur Aufnahme einer Längsspannschraube auf. Die radiale Gewindebohrung 46 erstreckt sich von einer radialen Außenseite des Halterschaft-Körpers 32 bis hinein zu dem Halterschaft-Zylinderabschnitt 44.

Der Halterschaft-Körper 32 weist ferner eine Axialbohrung 48 auf, die beispielsweise zum Zuführen von Schmier- oder Kühlfluid vorgesehen sein kann. Die Bohrung 46 erstreckt sich von einem der Halterschaft-Schnittstelle 38 gegenüberliegenden axialen Endseite des Halterschaft-Körpers 32 bis hinein zu einem Boden der Axialvertiefung, also einem Ende des Halterschaft-Zylinderabschnittes 44.

Die Werkzeughalteranordnung 24 weist ferner einen Werkzeughalter 28 auf. Der Werkzeughalter 28 weist, wie es in Fig. 1 dargestellt ist, einen Werkzeughalter-Körper 52 auf, an dessen einem axialen Ende eine Werkzeugaufnahme 54 ausgebildet ist, innerhalb der ein Werkzeug 22, beispielsweise in Form einer Schneidplatte, lösbar festgelegt werden kann. Eine axiale Länge des Werkzeughalters 28 mit daran befestigtem Werkzeug 22 ist in Fig. 1 mit Lw bezeichnet. Der Wert von Lw ist vorzugsweise kleiner als die Achse der Länge L_{H} des Halterschaftes 26.

Der Werkzeughalter 28 beinhaltet ferner eine Werkzeughalter-Schnittstelle 58, die komplementär zu der Halterschaft-Schaltstelle 38 ausgebildet ist.

Die Werkzeughalter-Schnittstelle 58 beinhaltet eine Werkzeughalter-Planfläche 60, die quer, insbesondere senkrecht zu der Längsachse 30 ausgerichtet ist.

Ferner weist die Werkzeughalter-Schnittstelle 58 einen Werkzeughalter-Konusabschnitt 62 auf, der sich von der Planfläche 60 aus erstreckt. Der Werkzeughalter-Konusabschnittt 62 erstreckt sich gegenüber der Längsachse 30 unter einem Winkel α_{P}, der in einem Bereich von 5° bis 75° liegen kann, insbesondere in einem Bereich von 5° bis 50°, vorzugsweise in einem Bereich von 5° bis 15°.

Der Werkzeughalter-Konusabschnitt 62 weist zumindest in einem Querschnitt benachbart zu der Planfläche 60 eine Polygonform auf. Von dem gegenüberliegenden axialen Ende des Werkzeughalter-Konusabschnittes 62 erstreckt sich ein Werkzeughalter-Zylinderabschnitt 64, der ebenfalls Teil der Werkzeughalter-Schnittstelle 58 ist.

Der Werkzeughalter-Konusabschnitt 62 weist eine axiale Länge L_{WP} auf. Der Werkzeughalter-Zylinderabschnitt 64 weist eine axiale Länge Lwz auf. Vorzugsweise gilt: L_{HP} = L_{WP} und/oder L_{WZ} = L_{HZ}. L_{HZ} kann jedoch auch größer sein als L_{WZ}.

Der Werkzeughalter-Körper 52 weist im Bereich des Werkzeughalter-Zylinderabschnittes 64 eine radiale Ausnehmung 66 auf, die eine unter einem Winkel α_{A} ausgerichtete Schrägfläche beinhaltet. Die Schrägfläche kann dabei Teil einer Konusform der radialen Ausnehmung 66 sein. Der Winkel α_{A} ist zwischen der Schrägfläche und einer Ebene eingerichtet, die senkrecht verläuft zu der Längsachse 30 und liegt vorzugsweise in einem Bereich von 20° bis 70°.

In Fig. 1 ist ferner in schematischer Form eine Längsspannschraube 70 gezeigt, die einen zylindrischen Gewindeabschnitt zum Einschrauben in die radiale Gewindebohrung 46 des Halterschaftes 26 aufweist, sowie einen sich von diesem zylindrischen Außengewindeabschnitt erstreckenden Konusabschnitt, dessen Steigung an den Winkel α_{A} angepasst ist. Radial ausgerichtete Zentralachsen von Ausnehmung 66 und Längsspannschraube 70 sind axial versetzt, wie es bei v schematisch gezeigt ist.

Zum Befestigen des Werkzeughalters 28 an dem Halterschaft 26 wird der Werkzeughalter-Zylinderabschnitt 64 in die Axialausnehmung des Halterschaftes 26 eingeführt. Die Zylinderabschnitte 44, 64 sind auf Passung gearbeitet, derart, dass sie sich gerade von Hand gegeneinander verschieben lassen. Die Konusabschnitte 42, 62 sind vorzugsweise selbstzentrierend ausgebildet. Sobald diese in andere gelangen, wird die Längsspannschraube 70 mittels eines Anzugswerkzeuges aktiviert. Hierdurch greift der Konusabschnitt der Längsspannschraube 70 an der Schrägfläche der radialen Ausnehmung 66 an, so dass durch den Versatz v eine Axialanzugskraft 76 erzeugt wird, mittels der der Werkzeughalter 28 axial hin zu dem Halterschaft 26 gezogen wird, und zwar solange, bis die Planflächen 40, 60 aneinander anliegen. In diesem Zustand ergibt sich auch eine Anlage der polygonalen Querschnitte von Werkzeughalter-Konusabschnitt 62 und Halterschaft-Konusabschnitt 42, derart, dass auch eine exakte Fixierung zwischen Werkzeughalter 28 und Halterschaft 26 in tangentialer Richtung, also in Drehrichtung bzw. Umfangsrichtung erreicht wird.

Die gleichzeitige Anlage im Bereich der Konusabschnitte 42, 62 und der Planflächen 60, 40 ergibt sich durch eine geometrische Überbestimmung, die aufgrund sehr exakter Bearbeitung dieser Flächen durch einen Fräsprozess erzielbar ist.

Zumindest die Planflächen 40, 60 werden nicht geschliffen. Vorzugsweise werden auch die Konusabschnitte 42, 62 nicht geschliffen. In vielen Fällen können auch die Zylinderabschnitte 44, 64 nicht geschliffen sein.

Vorzugsweise werden sowohl die Halterschaft-Schnittstelle 38 als auch die Werkzeughalter-Schnittstelle 58 nur fräsend, jedoch nicht schleifend bearbeitet.

Die radiale Gewindebohrung 46, die Längsspannschraube 70 und die radiale Ausnehmung 66 bilden gemeinschaftlich eine Axialanzugseinrichtung 74.

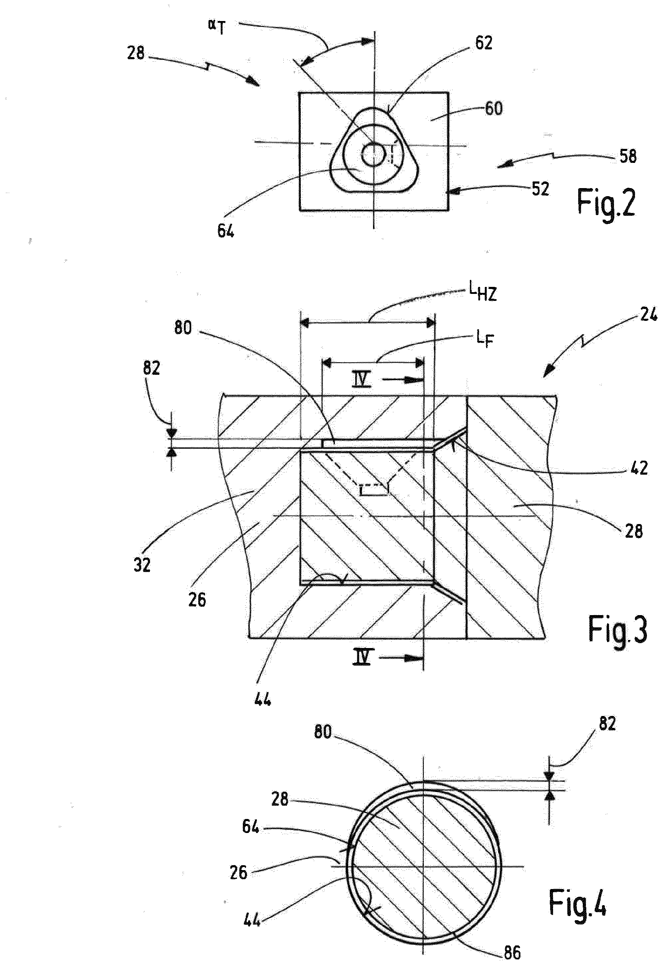

Fig. 2 zeigt eine Draufsicht auf die Werkzeughalter-Schnittstelle 58 und zeigt, dass die Kreisform des Werkzeughalter-Zylinderabschnittes 64 kontinuierlich in die Polygonform des Werkzeughalter-Konusabschnittes 62 übergeht, die dieser in einem Querschnitt benachbart zu der Planfläche 60 hat. Der Werkzeughalter-Konusabschnitt 62 ist im Wesentlichen dreieckig ausgebildet mit Verrundungen im Bereich der Dreiecksspitzen.

In den Fig. 1 und 2 ist gezeigt, dass sich bei einer Anlage der Planflächen 40, 60 eine exakte Position zwischen einer Schneidkante des Werkzeuges 22 und der Planfläche 60 ergeben kann. Ferner ist in Fig. 2 gezeigt, dass sich durch die Polygonform in Umfangsrichtung eine Relativlage zwischen dem Werkzeughalter 28 und einem damit befestigten Halterschaft eingerichtet werden kann, was in Fig. 2 durch einen Winkel α_{τ} schematisch angedeutet ist.

Der Werkzeughalter 28 wird vorzugsweise auf folgende Art und Weise hergestellt. Zunächst wird an einem Werkzeughalter-Rohling die Werkzeughalter-Schnittstelle 58 ausgebildet, und zwar vorzugsweise durch einen Fräsprozess.

Anschließend wird der so ausgebildete Werkzeughalter-Rohling in einen Referenz-Halterschaft eingesetzt, derart, dass die Werkzeughalter-Planfläche an einer Halterschaft-Planfläche des Referenz-Halterschaftes anliegt. Vorzugsweise wird hierzu eine Axialanzugseinrichtung 74 verwendet, wie sie in den Fig. 1 und 2 dargestellt ist.

Der Referenz-Halterschaft weist eine Halterschaft-Planfläche auf, die in Bezug auf andere Merkmale des Halterschaftes kalibriert ist, und zwar insbesondere hinsichtlich ihrer Position in x-Richtung. Ferner kann die Planfläche des Halterschaftes durch schleifende Bearbeitung oder dergleichen genauer kalibriert sein als die Planflächen normaler Halterschäfte sind, die nicht als Referenz-Halterschaft ausgebildet sind.

Nach dem Befestigen des Werkzeughalter-Rohlings an dem Referenz-Halterschaft wird eine Werkzeugaufnahme 54 des Werkzeughalter-Rohlings bearbeitet bzw. ausgearbeitet. Hierdurch kann die Werkzeughalteraufnahme in Bezug auf die Planfläche 60 exakt bearbeitet werden. Ein Referenzmaß, wie beispielsweise das Maß L_{WR} der Fig. 1, kann als Referenzlänge abgespeichert werden, die dem speziellen Werkzeughalter 28 zugeordnet ist. Diese Referenzlänge kann beispielsweise einer Steuerung einer Werkzeugmaschine eingegeben werden, wenn dieser Werkzeughalter zur Anwendung kommt. Hierdurch kann eine Kalibrierung oder zumindest eine Vorkalibrierung erfolgen.

Durch die Art und Weise der Herstellung des Werkzeughalters kann natürlich auch der in Fig. 2 gezeigte Winkel α_{τ} in Bezug auf die Werkzeugaufnahme exakt bekannt sein. Auch der Winkel α_{τ} (oder ein anderer ähnlicher Winkel) kann dem so hergestellten Werkzeughalter zugeordnet werden und beispielsweise einer Steuerung einer Werkzeugmaschine bekanntgegeben werden, wenn dieser Werkzeughalter verwendet wird.

Fig. 3 zeigt eine alternative Ausführungsform einer Werkzeughalteranordnung 24, die hinsichtlich Aufbau und Funktionsweise generell der Werkzeughalteranordnung 24 der Fig. 1 und 2 entspricht. Gleiche Elemente sind daher durch gleiche Bezugszeichen gekennzeichnet. Im Folgenden werden im Wesentlichen die Unterschiede erläutert.

So ist in Fig. 3 gezeigt, dass der Halterschaft 26 im Bereich des Halterschaft-Zylinderabschnittes 64 eine radiale Freistellungsvertiefung 80 aufweist, deren Sichelform in Fig. 4 zu erkennen ist.

Die Freistellungsvertiefung 80 erstreckt sich vorzugsweise über einen Winkelbereich von kleiner 180°, insbesondere kleiner 150°, und weist eine radiale Tiefe 82 auf, die vorzugsweise in einem Bereich von größer 0,1 mm und kleiner 2 mm liegt.

Die Freistellungsvertiefung 80 ist in axialer Richtung von dem Boden der Axialvertiefung in dem Halterschaft-Körper 32 beabstandet, erstreckt sich jedoch vorzugsweise in axialer Richtung bis hin zu dem Halterschaft-Konusabschnitt 42. Die axiale Länge L_{F} der Freistellungsvertiefung 80 ist folglich vorzugsweise kleiner als die axiale Länge L_{HZ} des Halterschaft-Zylinderabschnittes 44. Die Zylinderabschnitte 44, 64 von Halterschaft 26 und Werkzeughalter 29 sind auf Passung gearbeitet, wie es in Fig. 4 schematisch bei 86 angedeutet ist. Die Passung ist vorzugsweise eine Spielpassung, und zwar eine enge Spielpassung, so dass der Werkzeughalter 28 und der Halterschaft 26 sich gerade noch von Hand gegeneinander bewegen lassen.

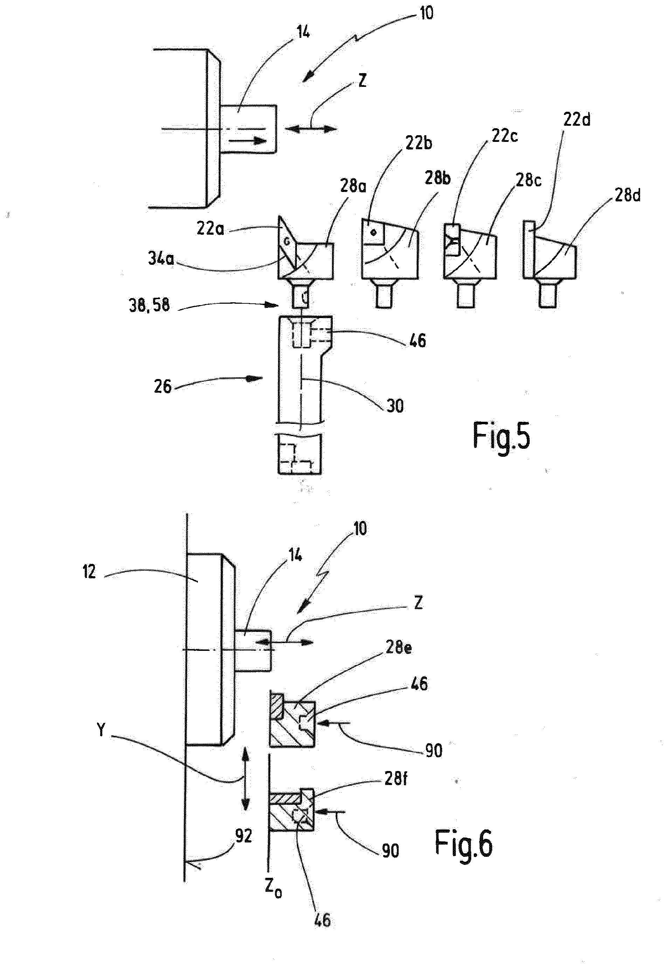

In Fig. 5 ist eine weitere Ausführungsform einer Werkzeugmaschine 10 mit einem Halterschaft 26 und einer Mehrzahl unterschiedlicher Werkzeughalter 28a, 28b, 28c, 28d gezeigt, die jeweils unterschiedliche Werkzeuge 22a, 22b, 22c, 22d tragen.

Die Werkzeuge können für unterschiedliche Arten der Drehbearbeitung eingerichtet sein, beispielsweise zum Plandrehen, zum Runddrehen, zum Schraubdrehen, zum Profildrehen, zum Formdrehen, etc.

In allen Fällen weisen die jeweiligen Werkzeughalter 28a-28d eine identische Werkzeughalter-Schnittstelle 58 auf, so dass die Werkzeuge 28a-28d jeweils in ein und demselben Halterschaft 26 eingesetzt und daran befestigt werden können.

In Fig. 5 ist ferner zu erkennen, dass die Werkzeuge 22a jeweils in einer Richtung quer zu der Längsachse 30 versetzt gegenüber der Längsachse 30 angeordnet sind, jedenfalls hinsichtlich ihrer in Eingriff kommenden Zerspanungsschneide.

Die radiale Gewindebohrung 46 des Halterschaftes 26 ist in dieser Ausrichtung generell auf einer radial gegenüberliegenden Seite der Längsachse 30 angeordnet, also in der Darstellung der Fig. 5 auf einer Seite, die dem Werkstück abgewandt ist. Mit anderen Worten sind die Werkzeugaufnahme 54 und die Axialanzugseinrichtung 74 in z-Richtung (siehe obige Definition) auf unterschiedlichen Seiten der Längsachse 30 der Werkzeughalteranordnung 24 angeordnet.

Hierdurch ergibt sich eine gute Zugänglichkeit, so dass die Werkzeughalter 28 einfach austauschbar sind.

In Fig. 6 ist eine Situation gezeigt, bei der eine Mehrzahl von Werkzeughaltern 28e, 28f, ... in Richtung der y-Achse parallel versetzt zueinander angeordnet sind. Die Werkzeughalter 28e, 28f können ebenfalls unterschiedliche Werkzeuge aufweisen, wie es in Fig. 6 gezeigt jedoch nicht näher bezeichnet ist.

In Fig. 6 ist ferner ein Spindelkasten 92 gezeigt. Der Zugang zu den jeweiligen radialen Gewindebohrungen 46 der jeweiligen Halterschäfte 26 erfolgt auf einer dem Spindelkasten 92 abgewandten Seite (in z-Richtung gesehen), so dass für sämtliche dieser Werkzeughalteranordnungen eine gute Zugänglichkeit gegeben ist, wie es in Fig. 6 bei 90 dargestellt ist.

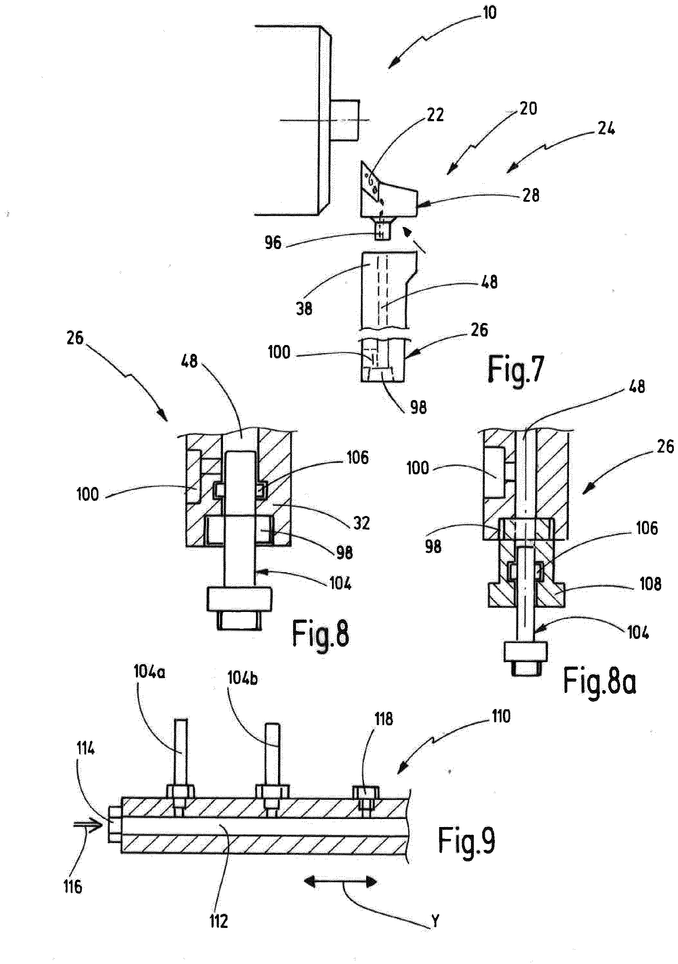

In Fig. 7 ist eine weitere Ausführungsform einer Werkzeughalteranordnung 24 gezeigt, wobei dargestellt ist, dass zum einen der Werkzeughalter 28 eine Werkzeughalter-Bohrung 96 zum Führen von Kühl- oder Schmierfluid aufweist, wobei die Werkzeughalter-Bohrung 96 an einem Ort aus dem Werkzeughalter-Körper 52 austreten kann, damit das Kühl- oder Schmierfluid auf das Werkzeug 22 gerichtet werden kann, vorzugsweise auf dessen Zerspanungsschneide.

Ferner ist in Fig. 7 gezeigt, dass eine in dem Halterschaft 26 vorgesehene Halterschaft-Bohrung 48 zum einem mit der Werkzeughalter-Bohrung 96 in Verbindung bringbar ist, um Kühl- oder Schmierfluid von dem Halterschaft 26 zu dem Werkzeughalter 28 zu übertragen. Aufgrund der hohen Anzugskräfte zwischen den Schnittstellen von Werkzeughalter 28 und Halterschaft 26 kann dabei in diesem Bereich auf eine Abdichtung vorzugsweise verzichtet werden.

Die Halterschaft-Bohrung 48 kann einen axialen Anschluss 98 aufweisen, oder einen radialen Anschluss 100, wobei dieser Anschlüsse 98, 100 im Bereich eines axialen Endes des Halterschaftes 26 vorgesehen sind, der der Halterschaft-Schnittstelle 38 axial gegenüberliegt.

In Fig. 8 ist ein Halterschaft 26 gezeigt, bei dem die Halterschaft-Bohrung 48 einen axialen Anschluss 98 aufweist. Ferner ist im Inneren der Halterschaft-Bohrung 48 ein Dichtring 106 vorgesehen, so dass ein in die Halterschaft-Bohrung 48 eingeführtes Zuführrohr 104 abgedichtet werden kann. Alternativ (Fig. 8a) kann ein Adapter 108 mit einem Dichtring 106 vorgesehen werden.

Wie es in Fig. 9 gezeigt ist, können eine Mehrzahl derartiger Zuführrohre 104a, 104b an einer Schmiermittelverteilereinrichtung 110 angeordnet sein. Die Schmiermittelverteilereinrichtung 110 weist einen sich beispielsweise in y-Richtung erstreckenden Verteilerkanal 112 auf, der mit einer Mehrzahl von Anzapfungen versehen ist, über die darin geführtes Schmier- oder Kühlfluid in die jeweiligen Zuführrohre 104a, 104b eingeführt werden kann. Der Verteilerkanal 112 ist mit einem Zuführanschluss 114 verbunden, über den Kühl- oder Schmierfluid 116 eingeführt werden kann. Nicht benötigte Abzapfungen des Verteilerkanals 112 können mit einem Stopfen 118 verschlossen werden.

## Patentansprüche

1. Werkzeughalter (28) für ein Werkzeug (22) zur spanenden Bearbeitung von Werkstücken, mit einem Werkzeughalter-Körper (52), der eine Werkzeughalter-Längsachse (30) definiert, an dem eine Werkzeugaufnahme (54) zur Festlegung eines Werkzeuges (22) ausgebildet ist und an dem eine Werkzeughalter-Schnittstelle (58) zur Befestigung des Werkzeughalters (28) an einem Halterschaft (26) ausgebildet ist, der in einer Werkzeugmaschine (10) einspannbar ist, wobei die Werkzeughalter-Schnittstelle (58) aufweist:
- eine quer zur Längsachse (30) ausgerichtete Werkzeughalter-Planfläche (60), an der eine Halterschaft-Planfläche (40) zur Anlage kommen kann, um zwischen der Werkzeugaufnahme (54) und dem Halterschaft (26) eine definierte Relativlage (L_{WR}) in Längsrichtung einrichten zu können,
- einen Werkzeughalter-Konusabschnitt (62), der in einem Querschnitt polygonförmig ist und der mit einem entsprechend polygonförmigen Halterschaft-Konusabschnitt (42) in Eingriff gelangen kann, um zwischen der Werkzeugaufnahme (54) und dem Halterschaft (26) eine definierte Relativlage (α_{τ}) in Tangentialrichtung einrichten zu können,
**dadurch gekennzeichnet, dass** der Werkzeughalter einen Werkzeughalter-Zylinderabschnitt (64), der mit einem entsprechenden Halterschaft-Zylinderabschnitt (44) zusammenwirken kann, aufweist, wobei an dem Werkzeughalter-Zylinderabschnitt (64) ein Axialanzugsmerkmal (66) einer Axialanzugseinrichtung (74) ausgebildet ist, die eine radiale Ausnehmung (66) in dem Werkzeughalter-Zylinderabschnitt (64) aufweist, die eine unter einem Winkel (α_{A}) ausgerichtete Schrägfläche aufweist, an der eine Längsspannschraube (70) des Halterschaftes (26) angreifen kann.

2. Werkzeughalter nach Anspruch 1, wobei die Werkzeugaufnahme (54) gegenüber der Werkzeughalter-Längsachse (30) in einer Querrichtung versetzt angeordnet ist, wobei die radiale Ausnehmung (66) in Querrichtung gesehen auf einer der Werkzeugaufnahme (54) gegenüberliegenden Seite der Werkzeughalter-Längsachse (30) angeordnet ist.

3. Werkzeughalter nach einem der Ansprüche 1 - 2, wobei der Werkzeughalter-Konusabschnitt (62) eine Form aufweist, die zumindest in einem Querschnitt benachbart zu der Werkzeughalter-Planfläche (60) im Wesentlichen polygonal ist.

4. Werkzeughalter nach einem der Ansprüche 1 - 3, wobei in dem Werkzeughalter-Körper (52) eine Werkzeughalter-Bohrung (96) zur Zuführung eines Kühl- oder Schmiermittels (116) ausgebildet ist.

5. Halterschaft (26) für einen Werkzeughalter (28), insbesondere einen Werkzeughalter (28) nach einem der Ansprüche 1 - 4, mit einem Halterschaft-Körper (32), der einen Schaftabschnitt (34) zum Einspannen in einer Spanneinrichtung (12) einer spanenden Werkzeugmaschine (10) und eine Halterschaft-Schnittstelle (38) zum Befestigen eines Werkzeughalters (28) an dem Halterschaft-Körper (32) aufweist, wobei die Halterschaft-Schnittstelle (38) aufweist:
- eine quer zu einer Längsachse (30) ausgerichtete Halterschaft-Planfläche (40), an der eine Werkzeughalter-Planfläche (60) in Anlage kommen kann, um zwischen dem Werkzeughalter (28) und dem Halterschaft (26) eine definierte Relativlage (L_{WR}) in Längsrichtung einrichten zu können,
- einen Halterschaft-Konusabschnitt (42), der in einem Querschnitt polygonförmig ist und der mit einem entsprechend polygonförmigen Werkzeughalter-Konusabschnitt (62) in Eingriff gelangen kann, um zwischen dem Werkzeughalter (28) und dem Halterschaft (26) eine definierte Relativlage (α_{τ}) in Tangentialrichtung einrichten zu können,
**dadurch gekennzeichnet, dass** der Halterschaft einen Halterschaft-Zylinderabschnitt (44), der mit einem entsprechenden Werkzeughalter-Zylinderabschnitt (64) zusammenwirken kann, aufweist, wobei der Halterschaft-Zylinderabschnitt (44) eine radiale Gewindebohrung (46) aufweist, in die eine Längsspannschraube (70) einschraubbar ist, die in eine radiale Ausnehmung (66) des Werkzeughalters (28) greifen kann.

6. Halterschaft nach Anspruch 5, wobei der Halterschaft-Zylinderabschnitt (44) eine radiale Freistellungsvertiefung (80) aufweist, die sich über eine axiale Länge (L_{F}) erstreckt, die kleiner ist als eine axiale Länge (L_{HZ}) des Halterschaft-Zylinderabschnittes (44).

7. Halterschaft nach Anspruch 6, wobei die radiale Freistellungsvertiefung (80) sich in Umfangsrichtung mit der radialen Gewindebohrung (46) überschneidet.

8. Halterschaft nach einem der Ansprüche 5 - 7, wobei der Halterschaft-Körper (32) eine Halterschaft-Bohrung (48) zur Zuführung eines Kühl- oder Schmiermittels (116) aufweist, die mit einer Werkzeughalter-Bohrung (96) eines Werkzeughalters (28) verbindbar ist.

9. Halterschaft nach Anspruch 8, wobei die Halterschaft-Bohrung (48) in einer der Halterschaft-Schnittstelle (38) gegenüberliegenden Stirnseite des Halterschaft-Körpers (32) mündet und eine Dichteinrichtung (106) aufweist, über die eine in die Halterschaft-Bohrung (48) eingeführtes Zuführrohr (104) abdichtbar ist.

10. Werkzeuganordnung (20) mit einer Werkzeughalteranordnung (24), die einen Werkzeughalter (28) nach einem der Ansprüche 1 - 4 mit einem daran festgelegten Werkzeug (22) und einen Halterschaft (26) nach einem der Ansprüche 5 - 9 aufweist.

11. Verfahren zum Herstellen eines Werkzeughalters nach einem der Ansprüche 1 - 4, mit den Schritten:
- Bereitstellen eines Werkzeughalter-Rohlings;
- Ausbilden der Werkzeughalter-Schnittstelle (58) an dem Werkzeughalter-Rohling;
- Einsetzen des Werkzeughalter-Rohlings in einen Referenz-Halterschaft, derart, dass die Werkzeughalter-Planfläche an einer Halterschaft-Planfläche (40) des Referenz-Halterschaftes anliegt; und
- Bearbeiten einer Werkzeugaufnahme (54) des Werkzeughalter-Rohlings, um den Werkzeughalter (28) fertigzustellen.

12. Verfahren nach Anspruch 11, wobei für den fertiggestellten Werkzeughalter (28) eine Referenzlänge (L_{WR}) abgespeichert wird, die ein Maß zwischen der Werkzeughalter-Planfläche (60) und einem Referenzpunkt der Werkzeugaufnahme (54) repräsentiert.

## Claims

1. . Tool holder (28) for a tool (22) for machining workpieces, with a tool holder body (52), which defines a tool holder longitudinal axis (30), on which tool holder body (52) a tool mount (54) for securing a tool (22) is formed and on which a tool holder interface (58) for fixating the tool holder (28) to a holder shaft (26) is formed, which can be clamped in a machine tool (10), wherein the tool holder interface (58) comprises:
- a tool holder plane surface (60) oriented transversely to the longitudinal axis (30), against which tool holder plane surface (60) a holder shaft plane surface (40) can come into abutment in order to be able to establish a defined relative position (L_{WR}) in longitudinal direction between the tool mount (54) and the holder shaft (26),
- a tool holder cone section (62), which is polygonal in a cross-section and which can come into engagement with a correspondingly polygonal holder shaft cone section (42) in order to be able to establish a defined relative position (α_{τ}) in tangential direction between the tool mount (54) and the holder shaft (26),
**characterized in that**
the tool holder comprises a tool holder cylinder section (64) which can act together with a corresponding holder shaft cylinder section (44),
wherein an axial tightening feature (66) of an axial tightening device (74) is formed on the tool holder cylinder section (64), which axial tightening device comprises a radial recess (66) in the tool holder (28), the radial recess (66) comprising a slanted surface oriented at an angle (α_{A}), on which a longitudinal clamping screw (70) of the holder shaft (26) can engage.

2. . Tool holder according to claim 1, wherein the tool mount (54) is arranged offset in a transverse direction with respect to the tool holder longitudinal axis (30), the radial recess (66) being arranged on a side of the tool holder longitudinal axis (30) opposite the tool mount (54) as viewed in the transverse direction.

3. . Tool holder according to any one of claims 1 - 2, wherein the tool holder cone section (62) has a shape which is substantially polygonal at least in a cross-section adjacent to the tool holder plane surface (60).

4. . Tool holder according to any one of claims 1 - 3, wherein a tool holder bore (96) for supplying a coolant or lubricant (1 16) is formed in the tool holder body (52).

5. . Holder shaft (26) for a tool holder (28), in particular a tool holder (28) according to one of claims 1 - 4, with a holder shaft body (32) which comprises a shaft section (34) for clamping in a clamping device (12) of a machine tool (10) and a holder shaft interface (38) for fastening a tool holder (28) to the holder shaft body (32), the holder shaft interface (38) comprising
- a holder shaft plane surface (40) oriented transversely to a longitudinal axis (30), against which holder shaft plane surface (40) a tool holder plane surface (60) can come into abutment in order to be able to establish a defined relative position (L_{WR}) in longitudinal direction between the tool holder (28) and the holder shaft (26),
- a holder shaft cone section (42), which is polygonal in a cross-section and which can come into engagement with a correspondingly polygonal tool holder cone section (62) in order to be able to establish a defined relative position (α_{τ}) in tangential direction between the tool holder (28) and the holder shaft (26),
**characterized in that**
the holder shaft comprises a holder shaft cylinder section (44) which can act together with a corresponding tool holder cylinder section (64),
wherein the holder shaft cylinder section (44) comprises a radial threaded bore (46) into which a longitudinal clamping screw (70) can be screwed, which can engage in a radial recess (66) of the tool holder (28).

6. . Holder shaft according to claim 5, wherein the holder shaft cylinder section (44) comprises a radial clearance recess (80) extending over an axial length (L_{F}) which is smaller than an axial length (L_{HZ}) of the holder shaft cylinder section (44).

7. . Holder shaft according to claim 6, wherein the radial clearance recess (80) overlaps with the radial threaded bore (46) in circumferential direction.

8. . Holder shaft according to one of claims 5 - 7, wherein the holder shaft body (32) comprises a holder shaft bore (48) for supplying a coolant or lubricant (116), which can be connected to a tool holder bore (96) of a tool holder (28).

9. . Holder shaft according to claim 8, wherein the holder shaft bore (48) opens into an end face of the holder shaft body (32) opposite the holder shaft interface (38) and comprises a sealing device (106), via which a feed tube (104) introduced into the holder shaft bore (48) can be sealed.

10. . Tool assembly (20) with a tool holder assembly (24) comprising a tool holder (28) according to one of claims 1 - 4 with a tool (22) secured thereto and a holder shaft (26) according to one of claims 5 - 9.

11. . Method for manufacturing a tool holder according to one of claims 1 - 4, comprising the steps:
- providing a tool holder blank;
- forming the tool holder interface (58) on the tool holder blank;
- inserting the tool holder blank into a reference holder shaft such that the tool holder plane surface abuts a holder shaft plane surface (40) of the reference holder shaft; and
- machining a tool mount (54) of the tool holder blank to finish the tool holder (28).

12. . Method according to claim 11, wherein for the finished tool holder (28) a reference length (L_{WR}) is stored which represents a dimension between the tool holder plane surface (60) and a reference point of the tool mount (54).

## Revendications

1. Porte-outil (28) pour un outil (22) pour l'usinage par enlèvement de copeaux de pièces à usiner, avec un corps de porte-outil (52) qui définit un axe longitudinal de porte-outil (20), sur lequel un logement d'outil (54) est réalisé pour la fixation d'un outil (22) et sur lequel une interface de porte-outil (58) est réalisée pour la fixation du porte-outil (28) sur une tige de support (26) qui peut être serrée dans une machine-outil (10), dans lequel l'interface de porte-outil (58) présente :
- une surface plane de porte-outil (60) orientée transversalement à l'axe longitudinal (30) sur laquelle une surface plane de tige de support (40) peut venir s'appuyer pour pouvoir ajuster en direction longitudinale une position relative définie (L_{WR}) entre le logement d'outil (54) et la tige de support (26),
- une section conique de porte-outil (62) qui est de forme polygonale dans une coupe transversale et qui peut parvenir en engrènement avec une section conique de tige de support (42) de forme polygonale correspondante pour pouvoir ajuster en direction tangentielle une position relative définie (α_{T}) entre le logement d'outil (54) et la tige de support (26),
**caractérisé en ce que**
le porte-outil présente une section cylindrique de porte-outil (64) qui peut coopérer avec une section cylindrique de tige de support correspondante (44), dans lequel une caractéristique de serrage axial (66) d'un dispositif de serrage axial (74) est réalisée sur la section cylindrique de porte-outil (64), lequel dispositif présente un évidement radial (66) dans la section cylindrique de porte-outil (64) qui présente une surface inclinée orientée à un angle (α_{A}) sur laquelle une vis de serrage longitudinal (70) de la tige de support (26) peut être appliquée.

2. Porte-outil selon la revendication 1, dans lequel le logement d'outil (54) est disposé de manière décalée dans une direction transversale par rapport à l'axe longitudinal de porte-outil (30), dans lequel l'évidement radial (66) est disposé sur un côté opposé au logement d'outil (54) de l'axe longitudinal de porte-outil (30), vu dans la direction transversale.

3. Porte-outil selon une des revendications 1 et 2, dans lequel la section conique de porte-outil (62) présente une forme qui est essentiellement polygonale au moins dans une section transversale voisine de la surface plane de porte-outil (60).

4. Porte-outil selon une des revendications 1 à 3, dans lequel un alésage de porte-outil (96) est réalisé dans le corps de porte-outil (52) pour l'amenée d'un réfrigérant ou lubrifiant (116).

5. Tige de support (26) pour un porte-outil (28), notamment un porte-outil (28) selon une des revendications 1 à 4, avec un corps de tige de support (32) qui présente une section de tige (34) pour le serrage dans un dispositif de serrage (12) d'une machine-outil à enlèvement de copeaux (10) et une interface de tige de support (38) pour la fixation d'un porte-outil (28) sur le corps de tige de support (32), dans laquelle l'interface de tige de support (38) présente :
- une surface plane de tige de support (40) orientée transversalement à un axe longitudinal (30) sur laquelle une surface plane de porte-outil (60) peut venir s'appuyer pour pouvoir ajuster en direction longitudinale une position relative définie (L_{WR}) entre le porte-outil (28) et la tige de support (26),
- une section conique de tige de support (42) qui est de forme polygonale dans une coupe transversale et qui peut parvenir en engrènement avec une section conique de porte-outil (62) de forme polygonale correspondante pour pouvoir ajuster en direction tangentielle une position relative définie (α_{T}) entre le porte-outil (28) et la tige de support (26),
**caractérisée en ce que** la tige de support présente une section cylindrique de tige de support (44) qui peut coopérer avec une section cylindrique de porte-outil correspondante (64),
dans laquelle la section cylindrique de tige de support (44) présente un alésage fileté radial (46) dans lequel une vis de serrage longitudinal (70) peut être vissée, laquelle peut se conjuguer dans un évidement radial (66) du porte-outil (28).

6. Tige de support selon la revendication 5, dans laquelle la section cylindrique de tige de support (44) présente un renfoncement de libération radial (80) qui s'étend sur une longueur axiale (L_{F}) qui est inférieure à une longueur axiale (L_{HZ}) de la section cylindrique de tige de support (44).

7. Tige de support selon la revendication 6, dans laquelle le renfoncement de libération radial (80) coupe l'alésage fileté radial (46) dans la direction périphérique.

8. Tige de support selon une des revendications 5 à 7, dans laquelle le corps de tige de support (32) présente un alésage de tige de support (48) pour l'amenée d'un réfrigérant ou lubrifiant (116) qui peut être connecté à un alésage de porte-outil (96) d'un porte-outil (28).

9. Tige de support selon la revendication 8, dans laquelle l'alésage de tige de support (48) débouche dans un côté frontal opposé à l'interface de tige de support (38) du corps de tige de support (32) et présente un dispositif d'étanchéité (106) par le biais duquel un tuyau d'amenée (104) introduit dans l'alésage de tige de support (48) peut être étanchéifié.

10. Agencement d'outil (20) avec un agencement de porte-outil (24) qui présente un porte-outil (28) selon une des revendications 1 à 4 avec un outil fixé à lui (22) et une tige de support (26) selon une des revendications 5 à 9.

11. Procédé de fabrication d'un porte-outil selon une des revendications 1 à 4, avec les étapes :
- mise à disposition d'une ébauche de porte-outil ;
- réalisation de l'interface de porte-outil (58) sur l'ébauche de porte-outil ;
- insertion de l'ébauche de porte-outil dans une tige de support de référence de telle sorte que la surface plane de porte-outil repose sur une surface plane de tige de support (40) de la tige de support de référence ; et
- usinage d'un logement d'outil (54) de l'ébauche de porte-outil pour terminer le porte-outil (28).

12. Procédé selon la revendication 11, dans lequel une longueur de référence (L_{WR}) est mémorisée pour le porte-outil terminé (28), laquelle représente une mesure entre la surface plane de porte-outil (60) et un point de référence du logement d'outil (54).
